# EUROPÄISCHE PATENTSCHRIFT

(11) **EP 0 652 187 B1**
(45) Veröffentlichungstag und Bekanntmachung des Hinweises auf die Patenterteilung: **12.03.1997**
(21) Anmeldenummer: 94113183.1
(22) Anmeldetag: 24.08.1994
(51) Int. Cl.: C04B 28/10, C04B 14/24

(54) **Putzmörtel mit hoher Wärmedämmfähigkeit**
Stucco mortar with high thermal insulation capacity
Mortier d'enduit à capacité d'isolation thermique élevée

(30) Priorität: 05.11.1993 DE 4337777
(43) Veröffentlichungstag der Anmeldung: 10.05.1995
(73) Patentinhaber: DENNERT PORAVER GmbH, D-96130 Schlüsselfeld (DE)
(72) Erfinder:
(74) Vertreter: Rau, Manfred, Dr. Dipl.-Ing.

(56) Entgegenhaltungen:
- EP-A- 0 144 965
- CH-A- 310 759
- FR-A- 2 307 092
- FR-A- 2 329 608

## Beschreibung

Die Erfindung betrifft einen Putzmörtel mit hoher Wärmedämmfähigkeit, der insbesondere als Trockenmörtel für das maschinelle Fördern und/oder Putzen ausgelegt ist.

Ein derartiger Putzmörtel ist z.B. aus der EP 0 144 965 B1 bekannt. Die diesem Patent zugrundeliegende Erfindung fußt auf den Einsatz von Schaumglasgranulat mit einem Gewichtsanteil von 8 bis 20% in der Trockenmörtelmischung. Durch die Verwendung von Schaumglasgranulat wird eine Vielzahl von Vorteilen erreicht, wie z.B. eine hohe Förderwilligkeit des Mörtels im trockenen wie im nassen Zustand, keine Entmischung des Trockenmörtels beim Massentransport, eine verbesserte Ergiebigkeit sowie gegenüber herkömmlichen maschinenverarbeitbaren Mörteln höhere Dämmwerte und bessere Temperaturdehnwerte. Ungeachtet dieser Vorteile ist der bekannte Putzmörtel insbesondere hinsichtlich seiner Wärmedämmeigenschaften noch verbesserungsbedürftig.

Der Erfindung liegt demzufolge die Aufgabe zugrunde, eine Putzmörtelzusammensetzung anzugeben, derer Wärmedämmeigenschaften unter Beibehaltung der schaumglasgranulat-bedingten Vorteile verbessert werden.

Diese Aufgabe wird durch die im Kennzeichnungsteil des Patentanspruches 1 angegebene Mörtelzusammensetzung gelöst. Demgemäß soll der Putzmörtel einen Anteil von 25 bis 55 Gew.-% Schaumglasgranulat, 10 bis 25 Gew.-% Kalkhydrat, 15 bis 50 Gew.-% hydraulisch erhärtende Bindemittel sowie weitere mineralische Zuschlagstoffe und chemische Zusatzmittel zur Erreichung der gewünschten Ver- und Bearbeitbarkeit, zur Plastifizierung, zur Einstellung des Wasserrückhaltevermögens, zur Sicherstellung der Thixotropie und/oder zur Hydrophobierung des Putzmörtels enthalten. Die einzelnen Zuschlagstoffe und -mittel sind zwar unterschiedlichster Natur, jedoch üblich und in ihrer Anwendung und Wirkungsweise dem Fachmann bekannt. Insofern bedarf es keiner weiteren näheren Erörterungen.

Gegenüber dem Stand der Technik weist der erfindungsgemäße Putzmörtel also einen drastisch erhöhten Schaumglasgranulat-Anteil auf, der in erster Linie für die Verbesserung der Wärmedämmeigenschaften verantwortlich ist. Aufgrund der Erhöhung des Schaumglasgranulat-Anteiles wurde jedoch festgestellt, daß die Verarbeitbarkeit des Putzes, insbesondere dessen maschinelle Förderbarkeit zu leiden beginnt. Um hier einen Ausgleich zu schaffen, ist der hohe Kalkhydratanteil von 10 bis 25 Gew.-% vorgesehen. Kalkhydrat, das ein lufttrocknendes Bindemittel ist, erhöht aufgrund seiner Materialeigenschaften die innere Gleitfähigkeit der Mörtelmischung, so daß das Schaumglasgranulat durch die Kalkhydrat-Beimischung schonend verarbeitet und der Putz wieder problemlos gefördert werden kann.

Mit dem erfindungsgemäßen Putzmörtel können Putzschichten erreicht werden, die eine Wärmeleitzahl von 0,08 bis 0,16 W/mK und eine Rohdichte im trockenen, verarbeiteten Zustand von 350 kg/m³ bis 1.100 kg/m³ aufweisen. Die Druckfestigkeiten dieser Putzschichten liegen im Bereich von 0,5 N/mm² bis 7 N/mm² (Druckfestigkeit nach 28 Tagen Standzeit gemäß DIN 18 550 Teil 3). Weiterhin ist von Vorteil, daß der erfindungsgemäße Putzmörtel in Schichtdicken von bis zu 100 mm in mehreren Arbeitsgängen in einer Lage aufgebracht werden können. Der erfindungsgemäße Putzmörtel ist also aufgrund seiner Standfestigkeit sehr rationell verarbeitbar.

Gemäß Anspruch 2 liegt der Anteil an Schaumglasgranulat im Bereich von 45 bis 55 Gew.-%. Dieser hohe Schaumglasgranulat-Anteil kommt wiederum einer besonders hohen Wärmedämmfähigkeit zugute.

Die im Anspruch 3 angegebenen Korngrößen des verwendeten Schaumglasgranulats von 0,25 bis 4 mm wirken sich vorteilhaft auf die Verarbeitbarkeit des erfindungsgemäßen Putzmörtels aus.

Demselben Zweck dient die kugelförmige Ausgestaltung der Schaumglasgranulat-Körper gemäß Anspruch 4.

Anspruch 5 kennzeichnet einen vorteilhaften Bereich für den Kalkhydrat-Anteil in Putzmörtel.

Die in den Ansprüchen 6 bis 8 angegebenen Mörtelrezepturen betreffen erfindungsgemäße Putzmörtel, die besonders als Wärmedämmputz (Anspruch 6), als Spritzmörtel zum Ausfüllen von Gefachen und zum Verfüllen von Schlitzen und Hohlräumen (Anspruch 7) bzw. als ein Leichtputz zur Verwendung als Einlagen- oder Oberputz (Anspruch 8) geeignet sind.

Im übrigen ist der erfindungsgemäße Putzmörtel sowohl auf üblichen Putzmaschinen, als auch zusammen mit Schaummitteln z.B. mit Verfahren und Vorrichtungen verarbeitbar, wie sie aus den deutschen Patentschriften DE 41 18 536 C1 und DE 41 18 537 C1 hervorgehen.

Im folgenden werden drei Ausführungsbeispiele für erfindungsgemäße Putzmörtel angegeben:

### 1. Ausführungsbeispiel: Wärmedämmputz

Es handelt sich um einen Putz in Anlehnung an DIN 18 550, Teil 3, der eine minimale Rohdichte bis ungefähr 0,3 kg/dm³ und eine Wärmeleitzahl von etwa 0,08 W/mK aufweisen kann.

Rezeptur des Trockenmörtels:
- Schaumglasgranulat: Korngröße 0,5 bis 1,0 mm und 1,0 bis 2,0 mm in gleichen Gewichtsanteilen: 51,7 Gew.-%
- Kalkhydrat: 13,8 Gew.-%
- hydraulisch erhärtende Bindemittel: 29,3 Gew.-%
- Kalksteinmehl als weiterer mineralischer Zuschlagstoff: 3,4 Gew.-%
- Rest chemische Zusatzmittel wie eingangs erwähnt.

### 2. Ausführungsbeispiel: Spritzmörtel

Der Spritzmörtel ist geeignet zum Ausfüllen von Gefachen und zum Verfüllen von Schlitzen und Hohlräumen.

Unter Laborbedingungen wird eine Frischmörtel-Rohdichte von 0,670 kg/dm³ und eine Trocken-Rohdichte von ungefähr 0,450 kg/dm³ erreicht. Die Frischmörtel-Rohdichte beträgt ca. 1,0 kg/dm³ unter Praxisbedingungen.

Die erreichbare Wärmeleitzahl liegt bei ca. 0,12 W/mK
Rezeptur des Trockenmörtels:
- Schaumglasgranulat mit Korngrößen von 0,5 bis 2,0 mm: 38 Gew.-%
- Kalkhydrat: 10,8 Gew.-%
- hydraulisch erhärtende Bindemittel: 35 Gew.-%
- Kalksteinmehl als mineralischer Zuschlagstoff: 13,5 Gew.-%
- Rest chemische Zusatzmittel (wie oben).

### 3. Ausführungsbeispiel: Leichtputz

Der als Einlagen- oder Oberputz zu verwendende Leichtputz gemäß der folgenden Rezeptur erreicht eine Rohdichte von 0,6 Kg/dm³ und eine Wärmeleitzahl im Bereich von 0,16 W/mK.

Rezeptur des Trockenmörtels:
- Schaumglasgranulat mit Korngrößen von 0,5 bis 4,0 mm: 29 Gew.-%
- Kalkhydrat: 12,4 Gew.-%
- hydraulisch erhärtende Bindemittel 16,6 Gew.-%
- Kalksteinmehl und Sande bis 1,5 mm Korngröße als weitere mineralische Zuschlagsstoffe: 37,4 Gew.-%
- Rest chemische Zusatzmittel (wie oben).

## Patentansprüche

1. Putzmörtel mit hoher Wärmedämmfähigkeit, insbesondere als Trockenmörtel für das maschinelle Fördern und/oder Putzen auf der Basis von Schaumglasgranulat, gekennzeichnet durch folgende Zusammensetzung von Ausgangsstoffen in Gew.-% bezogen auf deren Trocken-Gesamtgewicht:
- 25 bis 55 Gew.-% Schaumglasgranulat,
- 10 bis 25 Gew.-% Kalkhydrat,
- 15 bis 50 Gew.-% hydraulisch erhärtende Bindemittel,
zuzüglich weiterer mineralischer Zuschlagstoffe und chemischer Zusatzmittel zur Erreichung der gewünschten Ver- und Bearbeitbarkeit, zur Plastifizierung, zur Einstellung des Wasserrückhaltevermögens, zur Sicherstellung der Thixotropie und/oder Hydrophobierung.

2. Putzmörtel nach Anspruch 1, dadurch gekennzeichnet, daß der Anteil an Schaumglasgranulat im Bereich von 45 bis 55 Gew.-% liegt.

3. Putzmörtel nach Anspruch 1 oder 2, dadurch gekennzeichnet, daß das Schaumglasgranulat eine Korngröße von 0,25 bis 4,0 mm, vorzugsweise von 0,5 bis 2,0 mm aufweist.

4. Putzmörtel nach einem der Ansprüche 1 bis 3, dadurch gekennzeichnet, daß die Schaumglasgranulat-Körper im wesentlichen Kugelgestalt aufweisen.

5. Putzmörtel nach einem der Ansprüche 1 bis 4, dadurch gekennzeichnet, daß der Anteil an Kalkhydrat im Bereich von 10 bis 18 Gew.-% liegt.

6. Putzmörtel nach einem der Ansprüche 1 bis 5, gekennzeichnet durch folgende Anteilszusammensetzung:
- Schaumglasgranulat
(Korngröße 0,5 bis 1,0 mm und 1,0 bis 2,0 mm in gleichen Gewichtsanteilen): 50 bis 52 Gew.-%
- Kalkhydrat: 12 bis 15 Gew.-%
- hydraulisch erhärtende Bindemittel: 29 bis 31 Gew.-%
- Kalksteinmehl als weiterer mineralischer Zuschlagstoff: 3 bis 5 Gew.-%
- Rest chemische Zusatzmittel.

7. Putzmörtel nach einem der Ansprüche 1 bis 5, gekennzeichnet durch folgende Anteilszusammensetzung:
- Schaumglasgranulat
(Korngröße von 0,5 bis 2,0 mm): 37 bis 39 Gew.-%
- Kalkhydrat: 10 bis 12 Gew.-%
- hydraulisch erhärtende Bindemittel: 34 bis 36 Gew.-%
- Kalksteinmehl als mineralischer Zuschlagstoff: 13 bis 15 Gew.-%
- Rest chemische Zusatzmittel.

8. Putzmörtel nach einem der Ansprüche 1 bis 5, gekennzeichnet durch folgende Anteilszusammensetzung:
- Schaumglasgranulat
(Korngröße von 0,5 bis 4,0 mm): 28 bis 30 Gew.-%
- Kalkhydrat: 12 bis 14 Gew.-%
- hydraulisch erhärtende Bindemittel: 16 bis 18 Gew.-%
- Kalksteinmehl und Sande bis 1,5 mm Korngröße als weitere mineralische Zuschlagsstoffe: 36 bis 38 Gew.-%
- Rest chemische Zusatzmittel.

## Claims

1. Stucco mortar with high thermal insulation capacity, in particular as dry mortar, for machine conveying and/or plastering on the basis of foam glass granulate, characterized by the following composition of basic materials in percent by weight related to their total dry weight:
- 25 to 55 % by weight foam glass granulate,
- 10 to 25 % by weight lime hydrate,
- 15 to 50 % by weight hydraulically hardening binding agents,
plus further mineral additives and chemical additives for obtaining the desired working properties and workability, for plasticizing, for setting the water retention value, for the assurance of thixotropy and/or water repellent finishing.

2. Stucco mortar according to claim 1, characterized in that the portion of foam glass granulate ranges from 45 to 55 % by weight.

3. Stucco mortar according to claim 1 or 2, characterized in that the foam glass granulate has a granular size of 0.25 to 4.0 mm, preferably 0.5 to 2.0 mm.

4. Stucco mortar according to one of claims 1 to 3, characterized in that the foam glass granules are substantially spherical.

5. Stucco mortar according to one of claims 1 to 4, characterized in that the portion of lime hydrate ranges from 10 to 18 % by weight.

6. Stucco mortar according to one of claims 1 to 5, characterized by the following percentage composition:
- foam glass granulate
(granular size 0.5 to 1.0 mm and 1.0 to 2.0 mm in equal percentage by weight): 50 to 52 % by weight
- lime hydrate: 12 to 15 % by weight
- hydraulically hardening binding agents: 29 to 31 % by weight
- limestone flour as a further mineral additive: 3 to 5 % by weight
- rest chemical additives.

7. Stucco mortar according to one of claims 1 to 5, characterized by the following percentage composition:
- foam glass granulate
(granular size from 0.5 to 2.0 mm): 37 to 39 % by weight
- lime hydrate: 10 to 12 % by weight
- limestone flour as a mineral additive: 13 to 15 % by weight
- rest chemical additives.

8. Stucco mortar according to one of claims 1 to 5, characterized by the following percentage composition:
- foam glass granulate
(granular size from 0.5 to 4.0 mm): 28 to 30 % by weight
- lime hydrate: 12 to 14 % by weight
- hydraulically hardening binding agents: 16 to 18 % by weight
- limestone flour and sands of a granular size up to 1.5 mm as further mineral additives: 36 to 38 % by weight
- rest chemical additives.

## Revendications

1. Mortier d'enduit à capacité d'isolation thermique élevée, qui est notamment prévu en tant que mortier sec pour le transport et/ou le crépissage à la machine, à base de granulats de verre mousse, caractérisé par la composition suivante de matières premières, en pourcentage en poids rapporté à leur poids total à sec:
- 25 à 55 % en poids de granulats de verre mousse,
- 10 à 25 % en poids de chaux hydratée,
- 15 à 50 % en poids de liants à durcissement hydraulique,
plus d'autres constituants minéraux additionnels et d'autres additifs chimiques pour obtenir l'aptitude à la mise en oeuvre et l'ouvrabilité souhaitées, pour obtenir la plasticité, pour régler le taux de rétention de l'humidité, pour assurer la thixotropie et/ou l'imperméabilisation.

2. Mortier d'enduit selon la revendication 1, caractérisé en ce que la teneur en granulats de verre mousse se situe dans une plage de 45 à 55 % en poids.

3. Mortier d'enduit selon la revendication 1 ou 2, caractérisé en ce que les granulats de verre mousse présentent une grosseur de grain de 0,25 à 4,0 mm, de préférence de 0,5 à 2,0 mm.

4. Mortier d'enduit selon l'une des revendications 1 à 3, caractérisé en ce que les corps de granulats de verre mousse présentent sensiblement une configuration en forme de bille.

5. Mortier d'enduit selon l'une des revendications 1 à 4, caractérisé en ce que la teneur en chaux hydratée se situe dans une plage de 10 à 18 % en poids.

6. Mortier d'enduit selon l'une des revendications 1 à 5, caractérisé par la composition en teneurs suivante:
- granulats de verre mousse
(grosseur de grain 0,5 à 1,0 mm et 1,0 à 2,0 mm selon des teneurs en poids identiques) : 50 à 52 % en poids
- chaux hydratée : 12 à 15 % en poids
- liants à durcissement hydraulique : 29 à 31 % en poids
- poudre de calcaire en guise d'autre constituant minéral additionnel : 3 à 5 % en poids
- reste: additifs chimiques.

7. Mortier d'enduit selon l'une des revendications 1 à 5, caractérisé par la composition en teneurs suivantes:
- granulats de verre mousse
(grosseur de grain 0,5 à 2,0 mm) : 37 à 39 % en poids
- chaux hydratée : 10 à 12 % en poids
- liants à durcissement hydraulique : 34 à 36 % en poids
- poudre de calcaire en guise de constituant minéral additionnel : 13 à 15 % en poids
- reste: additifs chimiques.

8. Mortier d'enduit selon l'une des revendications 1 à 5, caractérisé par la composition en teneurs suivantes:
- granulats de verre mousse
(grosseur de grain 0,5 à 4,0 mm) : 28 à 30 % en poids
- chaux hydratée : 12 à 14 % en poids
- liants à durcissement hydraulique : 16 à 18 % en poids
- poudre de calcaire et sable jusqu'à une grosseur de grain de 1,5 mm, en guise d'autres constituants minéraux additionnels : 36 à 38 % en poids
- reste: additifs chimiques.
